**Europäisches Patentamt**

**European Patent Office**

**Office européen des brevets**

(11) Veröffentlichungsnummer : **0 412 275 B1**

(12) **EUROPÄISCHE PATENTSCHRIFT**

(45) Veröffentlichungstag der Patentschrift :
**21.10.92 Patentblatt 92/43**

(21) Anmeldenummer : **90112172.3**

(22) Anmeldetag : **27.06.90**

(51) Int. Cl.⁵ : **B60B 1/00,** B60B 3/14,
B60B 25/00, B60B 3/02

(54) **Mehrteilige Felge.**

(30) Priorität : **07.08.89 DE 3926375**

(43) Veröffentlichungstag der Anmeldung :
**13.02.91 Patentblatt 91/07**

(45) Bekanntmachung des Hinweises auf die
Patenterteilung :
**21.10.92 Patentblatt 92/43**

(84) Benannte Vertragsstaaten :
**DE FR GB IT**

(56) Entgegenhaltungen :
**FR-A- 1 125 583**

(56) Entgegenhaltungen :
**GB-A- 101 056**
**GB-A- 322 124**
**US-A- 1 473 406**
**US-A- 2 710 230**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Dimson, Benjamin**
**Almendäckerstrasse 1/1**
**W-7531 Tiefenbronn-Mühlhausen (DE)**
Erfinder : **Schreiber, Reinhold, Dipl.-Ing.**
**Daimlerstrasse 7**
**W-7253 Renningen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine mehrteilige Felge nach dem Oberbegriff des Anspruchs 1.

Es ist eine mehrteilige Felge mit einem Zentralverschluß bekannt, die ein das Felgenbett bildendes Felgensegment umfaßt, in das eine mit netzartig angeordneten Rippen versehene Felgenschüssel eingeschraubt wird. Desweiteren sind aus der DE-A 17 55 523 Feigen bekannt, die durch die Ausbildung der Rippen eine Art Radialgebläse bilden und durch Öffnungen eine Luftzirkulation von und zur Radbremse gewährleisten.

Aufgabe der Erfindung ist es, eine mehrteilige Felge zu schaffen, die austauschbare Bauelemente umfaßt und in einfacher Weise umzurüsten ist, wobei eine optimale Luftzirkulation durch die Öffnungen zwischen den Rippen gewährleistet sein soll.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteil bestehen darin, daß die Felgenbauteile, wie äußerer Felgenring mit Grundrippen, Verstärkungsrippen sowie innerer Felgenring separate Bauelemente bilden, die zusammenschraubbar sind, wobei je nach Breite der Felge der äußere Felgenring und-/oder der innere Felgenring ausgetauscht werden kann.

Die Verstärkungsrippen sind zum äußeren Felgenteil in der Weise angeordnet, daß die Bohrungen zur Aufnahme von radträgerseitigen Bolzen im äußeren Felgenteil durch die Verstärkungsrippen verdeckt sind.

Die zueinander versetzte Anordnung der Verstärkungsrippen zu den Grundrippen und die Anordnung der Rippen in zwei parallelen Ebenen ergibt eine Luftzirkulation durch die verbleibenden Öffnungen zwischen den Rippen der Felge nach dem Ventilatorprinzip.

Ein Ausführungsbeispiel der Erfindung ist in der Zeichnung dargestellt und wird im folgenden näher beschrieben.

Es zeigen:

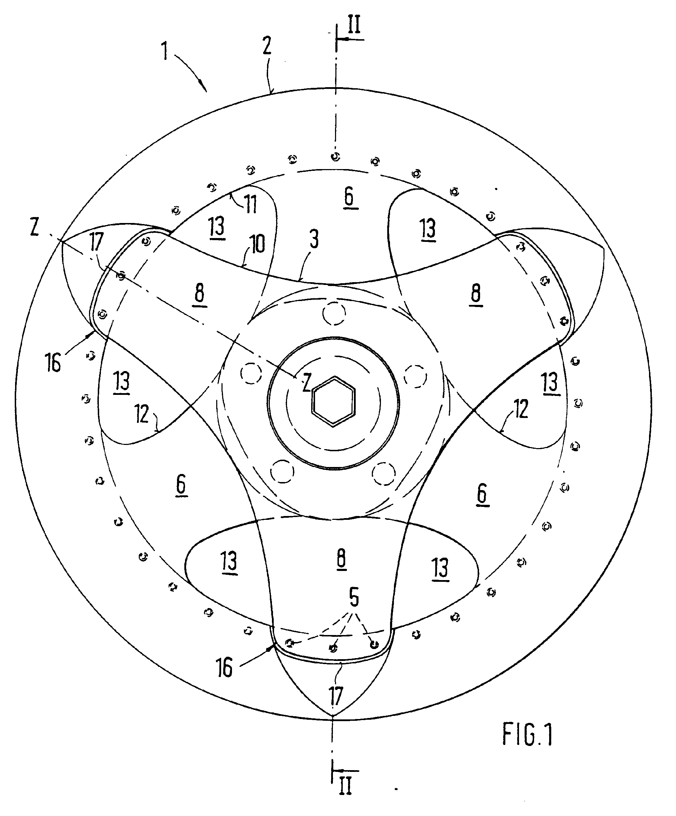

Fig. 1 eine Vorderansicht einer Felge mit Verstärkungs- und Grundrippen und
Fig. 2 einen Schnitt nach der Linie II-II der Fig. 1 durch die Felge.

Die Felge 1 umfaßt drei Felgensegmente 2, 3 und 4, die miteinander über Schrauben 5 verbunden sind. Das erste Segment 2 umfaßt einen Grundrippen 6 aufweisenden äußeren Felgenring 7, der das zweite Verstärkungsrippen 8 aufweisende Felgensegment 3 paßgenau aufnimmt. Diese Felgensegmente 2 und 3 sind mit einem das Felgensegment 4 bildenden inneren Felgenring 9 verbunden. Der äußere Felgenring 7 ist der Fahrzeugaußenseite A zugerichtet, wogegen der innere Felgenring 9 innerhalb des Fahrzeugs liegt und der Längsmittenachse des Fahrzeugs zugerichtet ist.

Die Rippen 6 und 8 der Felgensegmente 2 und 3 sind jeweils sternförmig angeordnet, wobei jedes Felgensegment 2 und 3 mindestens drei Rippen umfaßt. Diese bilden zwischen sich Öffnungen, insbesondere ovalförmige Öffnungen mit den Rändern 10, 11 und 11, 12. Durch Überdeckung der Rippen 6 und 8 ergeben sich sechs freiliegende durchgehende Luftöffnungen 13 zwischen den Rippen.

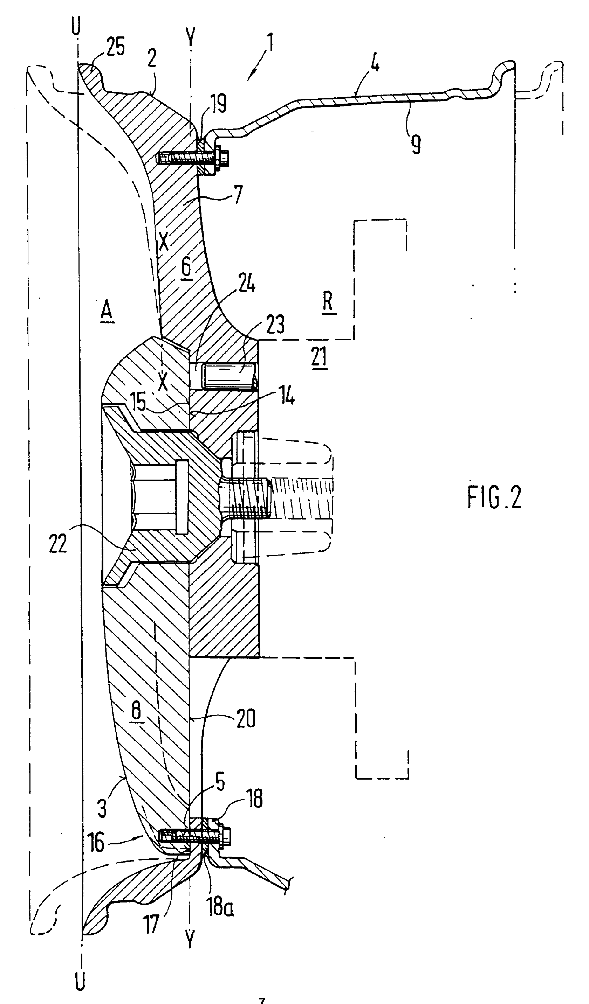

Das Felgensegment 2 weist eine zentrische Abstützfläche 14 auf (Fig. 2), die korrespondierend mit einer Anlagefläche 15 des weiteren Felgensegments 3 angeordnet ist. Diese Abstützfläche 14 ist so ausgebildet, daß sie tieferliegend zur Rippenebene X-X verläuft und einen zentrischen Teil der Anlagefläche 15 paßgenau aufnimmt, so daß die Rippen 8 und 6 wie bei einer gegossenen Ausführung mit sechs Rippen ineinanderübergehen.

Die freien Enden 16 der Verstärkungsrippen 8 sind jeweils an umfangsseitig des Felgensegments 2 ausgeformten flächigen Aufnahmen 17 abgestützt. Diesen steht das Felgensegment 4 mit seinem vom Felgenring 9 abgewinkelten Schenkel 18 mit der Fläche 18a gegenüber, mit dem der äußere Felgenring 7 sowie die freien Enden 16 der Verstärkungsrippen 8 über Bolzen 5 verschraubt werden.

Die flächige Aufnahme 17 für das Felgensegment 3 liegt annähernd in einer Ebene Y-Y mit der Anlagefläche 19 des Felgensegments 2 am inneren Felgenring 9.

Die Rippen 6 und 8 sind im Querschnitt etwa halbkreisförmig ausgeführt und weisen zur Radinnenseite R gerichtet eine plane Rückfläche 20 auf, wobei die Vorderfläche im Bereich der größten Dicke geringfügig abgeflacht sein kann.

Die Befestigung der Felge 1 am Rad erfolgt an einem Radträger 21 über einen Zentralverschluß 22, wobei zur Übertragung des Drehmoments am Radträger Bolzen 23 angeordnet sind, die in Bohrungen 24 des Felgensegments 2 eingreifen. Diese Bohrungen 24 sind nach außen über das Felgensegment 3 verdeckt.

Die in Fig. 2 angedeuteten in gestrichelten Linien gezeichneten Konturen des Felgensegments 2 und 4 stellen eine in der Abmessung breitere Felge dar, als die mit ausgezogenen Linien dargestellte Felge 1.

## Patentansprüche

1. Mehrteilige Felge mit Zentralverschluß für ein Kraftfahrzeug, die aus einer Grundrippen umfassenden Radschüssel besteht, welche an ein einen Hump aufweisendes Felgenbett anschließt, das eine Reifensitzfläche bildet, dadurch gekennzeichnet, daß die Grundrippen (6) einteilig mit einem der Radaußenseite zugerichteten äußeren Felgenring (7) ausgeführt sind, der zu den Grundrippen (6) versetzt angeordnete Verstärkungsrippen (8) umfaßt, die zusammen mit dem äußeren Felgenring (7) an einem anschließenden inneren Felgenring (9) über Schrauben (5) befestigbar sind und eine Felgeneinheit bilden.

2. Felge nach Anspruch 1, dadurch gekennzeichnet, daß diese jeweils mindestens drei sternförmig ausgeführte Grund- und Verstärkungsrippen (6 und 8) umfaßt, die versetzt zueinander angeordnet sind und zwischen sich durchgehende Luftöffnungen (13) bilden.

3. Felge nach den Ansprüchen 1 oder 2, dadurch gekennzeichnet, daß die Öffnungen zwischen den einzelnen Rippen (6 bzw. 8) der Felgensegmente (2 und 3) ovalförmig ausgeführt sind und in der Quermittenachse (Z-Z) dieser Öffnungen die Rippen (6 und 8) verlaufen.

4. Felge nach einem oder mehreren der vorhergehenden Ansprüche, dadurch gekennzeichnet, daß der Felgenring (7) mit den Grundrippen (6) ein einteiliges erstes Felgensegment (2) und die Verstärkungsrippen (8) ein zweites separates Felgensegment (3) bilden.

5. Felge nach Anspruch 4, dadurch gekennzeichnet, daß das erste Felgensegment (2) eine zentrische Abstützfläche (14) aufweist, die korrespondierend mit einer Anlagefläche (15) des zweiten Felgensegments (3) angeordnet ist.

6. Felge nach einem oder mehreren der vorhergehenden Ansprüche, dadurch gekennzeichnet, daß die Abstützfläche (14) in einer Vertiefung zwischen den einzelnen Grundrippen (6) angeordnet ist und das zweite Felgensegment (3) mit der Anlagefläche (14) und den Verstärkungsrippen (8) paßgenau aufnimmt.

7. Felge nach einem oder mehreren der vorhergehenden Ansprüche, dadurch gekennzeichnet, daß die freien Enden (16) der Verstärkungsrippen (8) jeweils an flächigen Aufnahmen (17) des äußeren Felgenringes (2) abgestützt sind und diese Aufnahmen (17) jeweils Abstützflächen (18a) an einem Schenkel (18) des inneren Felgenringes (9) gegenüberstehen und eine Befestigung über von der Radinnenseite (R) zur Radaußenseite (A) geführte Schrauben (5) erfolgt.

8. Felge nach einem oder mehreren der vorhergehenden Ansprüche, dadurch gekennzeichnet, daß die freien Enden (16) der Grundrippen (6) und der Verstärkungsrippen (7) annähernd in einer gleichen Radlängsebene (X-X) liegen.

9. Felge nach einem oder mehreren der vorhergehenden Ansprüche, dadurch gekennzeichnet, daß in der zentrischen Abstützfläche (14) des äußeren Felgenringes (7) Bohrungen (24) für Radbolzen (23) angeordnet und von der Anlagefläche (15) des Felgensegments (3) verdeckt sind.

10. Felge nach einem oder mehreren der vorhergehenden Ansprüche, dadurch gekennzeichnet, daß die Rippen (6 und 8) im Querschnitt etwa halbrundförmig ausgeführt sind und an der Radinnenseite (R) eine plane Rückfläche (20) aufweisen und die Vorderfläche mit einer Abflachung versehen ist.

11. Felge nach einem oder mehreren der vorhergehenden Ansprüchen, dadurch gekennzeichnet, daß die Verstärkungsrippen (8) innerhalb einer vom Felgenhorn (25) gebildeten Radlängsebene (U-U) angeordnet sind.

**Claims**

1. A multipart wheel rim with central locking for a motor vehicle, having a wheel disk which comprises base ribs and which is connected to a rim base having a hump and forming a tyre seat, characterised in that the base ribs (6) are formed in one piece with an outer rim ring (7) facing the outside of the wheel and comprising reinforcing ribs (8) which are arranged offset in relation to the base ribs (6) and which, together with the outer rim ring (7), can be secured to an adjacent inner rim ring (9) via screws (5) and form a rim unit.

2. A wheel rim according to claim 1, characterised in that this comprises at least three star-shaped base and reinforcing ribs (6 and 8) which are arranged offset in.relation to each other and form through air apertures (13) inbetween.

3. A wheel rim according to claim 1 or 2, characterised in that the apertures between the individual ribs (6 or 8) of the rim segments (2 and 3) are oval-shaped and the ribs (6 and 8) extend in the transverse axis (Z-Z) of these apertures.

4. A wheel rim according to one or more of the preceding claims, characterised in that the rim ring (7) with the base ribs (6) forms a one-part first rim segment (2) and the reinforcing ribs (8) form a second separate rim segment (3).

**5.** A wheel rim according to claim 4, characterised in that the first rim segment (2) has a central supporting surface (14) which is arranged so as to correspond with a contact surface (15) of the second rim segment (3).

**6.** A wheel rim according to one or more of the preceding claims, characterised in that the supporting surface (14) is arranged in a recess between the individual base ribs (6) and accommodates the second rim segment (3) with the contact surface (14) and the reinforcing ribs (8) so as to fit exactly.

**7.** A wheel rim according to one or more of the preceding claims, characterised in that the free ends (16) of the reinforcing ribs (8) are each supported on flat receiver surfaces (17) of the outer rim ring (2) and these receiver surfaces (17) are each located opposite supporting surfaces (18a) on an arm (18) of the inner rim ring (9) and securing is carried out by means of screws (5) directed from the inside of the wheel (R) towards the outside of the wheel (A).

**8.** A wheel rim according to one or more of the preceding claims, characterised in that the free ends (16) of the base ribs (6) and of the reinforcing ribs (7) lie approximately in the same longitudinal plane of the wheel (X-X).

**9.** A wheel rim according to one or more of the preceding claims, characterised in that bores (24) for wheel studs (23) are arranged in the central supporting surface (14) of the outer rim ring (7) and are covered by the contact surface (15) of the rim segment (3).

**10.** A wheel rim according to one or more of the preceding claims, characterised in that the ribs (6 and 8) are approximately hemispherical in cross-section and have a flat rear surface (20) on the inside of the wheel (R) and the front surface is provided with a flattened portion.

**11.** A wheel rim according to one or more of the preceding claims, characterised in that the reinforcing ribs (8) are arranged within a longitudinal plane of the wheel (U-U) formed by the rim flange (25).

**Revendications**

1. - Jante de roue en plusieurs parties avec verrouillage pour un véhicule automobile, qui est constituée d'un voile de roue comprenant des nervures de base, et qui se raccorde à une base de jante avec "hump" qui forme un siège pour le pneu, caractérisée en ce que les nervures de base (6) sont réalisées d'une seule pièce avec un anneau de jante (7) extérieur, dirigé vers le côté extérieur de la roue, lequel anneau comporte des nervures de renfort (8), décalées par rapport aux nervures de base (6), et qui peuvent être fixées, par des vis (5), avec l'anneau de jante (7) extérieur sur un anneau de jante intérieur se raccordant au premier, et qui forment une unité de jante.

2. - Jante de roue selon la revendication 1, caractérisée en ce que celle-ci comprend au moins trois nervures de base et de renfort (6 et 8) en étoile qui sont décalées les unes par rapport aux autres et qui forment entre elles des ouvertures d'air (13) traversantes.

3. - Jante de roue selon les revendications 1 ou 2 , caractérisée en ce que les ouvertures formées entre les différentes nervures (6 ou 8) des parties de jante (2 et 3) , sont ovales et en ce que les nervures (6 et 8) s'étendent dans l'axe médian transversal (Z-Z) de ces ouvertures.

4. - Jante de roue selon une ou plusieurs des revendications précédentes, caractérisée en ce que l'anneau de jante (7) forme avec les nervures de base (6) une première partie de jante (2) d'une seule pièce et les nervures de renfort (8) forment une seconde partie de jante (3) séparé.

5. - Jante de roue selon la revendication 4, caractérisée en ce que la première partie de jante (2) présente une surface d'appui (14) centrée qui est placée de manière à correspondre avec une surface d'application (15) de la seconde partie de jante (3).

6. - Jante de roue selon une ou plusieurs des revendications précédentes, caractérisée en ce que la surface d'appui (14) est située dans un creux, entre les différentes nervures de base (6) et loge, de manière ajustée, la seconde partie de jante (3) avec la surface d'application (14) et les nervures de renfort (8).

7. - Jante de roue selon une ou plusieurs des revendications précédentes, caractérisée en ce que les extrémités libres (16) des nervures de renfort (8) prennent appui chacune contre des logements (17) plats de l'anneau de jante (2) extérieur et en ce que ces logements (17) font face chacun à des surfaces d'appui (18a) d'une branche (18) de l'anneau de jante (9) intérieur et en ce qu'une fixation est assurée par des vis (5) allant du côté intérieur (R) au côté extérieur (A) de la roue.

8. - Jante de roue selon une ou plusieurs des revendications précédentes, caractérisée en ce que les extrémités libres des nervures de base (6) et des nervures de renfort (7) se situent à peu près dans un même plan longitudinal (X-X) de la roue.

9. - Jante de roue selon une ou plusieurs des revendications précédentes, caractérisée en ce que dans la surface d'appui (14) centrée de l'anneau de jante (7) extérieur, il est prévu des trous (24) pour des boulons (23) de la roue, qui sont dissimulés par la surface d'application (15) de la partie de jante (3).

10. - Jante de roue selon une ou plusieurs des revendications précédentes, caractérisée en ce que les nervures ( 6 et 8) ont une section transversale à peu près en demi-cercle et présentent une surface arrière (20) plane, sur le côté intérieur (R) de la roue et en ce que la surface avant est pourvue d'une partie plate.

11. - Jante de roue selon une ou plusieurs des revendications précédentes, caractérisée en ce que les nervures de renfort (8) sont placées à l'intérieur d'un plan longitudinal (U-U) de la roue, formé par la corne (25) de la jante.

FIG.1

FIG.2